Europäisches Patentamt

European Patent Office

Office européen des brevets

(11) Publication number: **0 070 736**

**B1**

(12) **EUROPEAN PATENT SPECIFICATION**

(45) Date of publication of patent specification: **10.07.85**

(21) Application number: **82303812.0**

(22) Date of filing: **20.07.82**

(51) Int. Cl.⁴: **B 01 D 53/36,** B 01 J 23/64

(54) Exhaust gas catalyst.

<table>
<tr><td>

(30) Priority: **20.07.81 US 284759**<br>**20.07.81 US 284762**<br>**20.07.81 US 284763**

(43) Date of publication of application:<br>**26.01.83 Bulletin 83/04**

(45) Publication of the grant of the patent:<br>**10.07.85 Bulletin 85/28**

(84) Designated Contracting States:<br>**DE FR GB**

(56) References cited:<br>**FR-A-2 130 677**<br>**FR-A-2 245 410**<br>**GB-A-1 558 004**<br>**GB-A-1 558 167**

</td><td>

(73) Proprietor: **FORD MOTOR COMPANY LIMITED**<br>**Eagle Way**<br>**Brentwood Essex CM13 3BW (GB)**<br>㊶ **GB**

(73) Proprietor: **FORD-WERKE**<br>**AKTIENGESELLSCHAFT**<br>**Ottoplatz 2 Postfach 21 03 69**<br>**D-5000 Köln 21 (DE)**<br>㊶ **DE**

(73) Proprietor: **FORD FRANCE SOCIETE ANONYME**<br>**344 Avenue Napoléon Bonaparte B.P. 307**<br>**F-92506 Rueil Malmaison Cedex (FR)**<br>㊶ **FR**

(72) Inventor: **Adams, Karen M.**<br>**25454 Graceland Circle**<br>**Dearborn Heights Michigan 48125 (US)**<br>Inventor: **Gandhi, Haren S.**<br>**28836 Creek Bend Drive**<br>**Farmington Hills Michigan 48018 (US)**

(74) Representative: **Drakeford, Robert William et al**<br>**Ford Motor Company Limited 15/448, Research**<br>**& Engineering Centre Laindon**<br>**Basildon Essex SS15 6EE (GB)**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to exhaust gas catalysts.

Exhaust gas catalysts find utility in several areas. For example s-called "three-way" catalysts are used with engines which are operated under stoichiometric or slightly fuel rich conditions. Oxidation catalysts are used with engines which produce oxygen rich exhaust gases as a result, for example, of operation of an internal combustion engine under oxygen rich (fuel deficient) conditions. In another case, exhaust gases, though oxygen deficient, may have oxygen added thereto to make the overall gases oxygen rich prior to treatment by such oxidation catalysts. They also find utility in the control of carbon monoxide, unburned hydrocarbons and oxides of nitrogen emitted from internal combustion engines operating with hydrocarbon fuels or fuels containing mixtures of hydrocarbons and alcohols.

It is well known that internal combustion engines normally associated with an automobile will generally operate on both sides of a stoichiometric air/fuel ratio during various modes of engine operation. For example, many engine systems, in particular the so-called "fast burn" engines currently under development, are designed to operate slightly fuel deficient during normal cruising modes of the vehicle. At such time, there is more air present than is required to oxidize the fuel. Therefore, the overall operating mode of the system is oxidizing and the catalyst system operates under oxidizing conditions. In other modes of engine operation, for example, during acceleration periods, internal combustion engines associated with automotive vehicles are normally operated on the rich side of stoichiometry. In this condition, there is more fuel present than air to oxidize the same. In such a case, the catalyst system is exposed to reducing conditions because there is not sufficient oxygen available over the catalyst system. In general, under fuel rich conditions, that is, when the catalyst system is exposed to reducing conditions, the platinum catalysts used hitherto had good characteristics with respect to the oxidation of unburned hydrocarbons. However, the platinum catalyst did not generally have good selectivity in the reduction of oxides of nitrogen. By this we mean that the platinum catalyst produced a great amount of ammonia, rather than nitrogen gas, by the reduction of oxides of nitrogen.

According to the present invention, there is provided an exhaust gas catalyst system comprising a support having palladium and tungsten deposited thereon, the support having an upstream support portion and a downstream support portion, characterised in that the palladium is deposited at least on the upstream support portion and the tungsten is deposited only on the downstream support portion.

The invention also relates to a method of treating exhaust gases from an internal combustion which comprises contacting the exhaust gases with an exhaust gas catalyst system as defined above in such a way that the exhaust gases initially flow over the upstream support portion and then over the downstream support portion.

The combination of palladium and tungsten produces a catalyst system which, under oxidizing conditions, is effective in the catalytic oxidation of unburned hydrocarbons and carbon monoxide, and, under reducing conditions, is effective not only in the catalytic oxidation of unburned hydrocarbons and carbon monoxide, but also in the catalytic reduction of oxides of nitrogen without significant production of ammonia. The catalyst system of this specification has these excellent characteristics when associated with a fast burn engine even though it is using materials substantially less expensive that a material such as platinum, which was previously used for this type for catalyst system.

The catalyst system also has excellent characteristics when used with a "slow burn" type of internal combustion engine either as a three-way catalyst or as an oxidation catalyst.

Additionally, the use of palladium is advantageous in view of its greater availability, especially in the United States of America.

In a first embodiment of the invention, the palladium is deposited on the upstream and downstream support portions, and the tungsten is deposited on the downstream support portion.

In a second embodiment of the invention, the palladium is deposited on an upstream support portion of the support, and tungsten is deposited on a downstream portion thereof.

The finely divided tungsten and palladium are preferably deposited on the support by a sequential impregnation processes. Where the palladium and tungsten are deposited sequentially on the same portion of the support, the tungsten is preferably deposited prior to the palladium so that the palladium is not covered up. In this embodiment, the tungsten is preferably present on the downstream support portion in quantities such that tungsten is available to substantially all of the palladium on that portion of the support so that the platinum/tungsten combination is effective in the catalytic oxidation of unburned hydrocarbons and carbon monoxide and the catalytic reduction of oxides of nitrogen without significant production of ammonia when the internal combustion engine is operating under fuel rich conditions.

The palladium and tungsten may be deposited simultaneously on the downstream support portion as a presynthesised compound e.g. of the formula $PdWO_x$ (where x=from 1 to 3).

It is understood by those skilled in the art that other catalyst materials, materials for protecting the catalyst materials, and materials for promoting the catalyst materials may also be present on the support medium to carry out those functions already well known to the skilled artisan.

By way of instruction and not by way of limitation to the scope of the invention, some particular details of a catalyst system falling within the scope of this invention are set forth therein. The support medium for the catalyst system may be of any suitable type, for example it may be a monolithic substrate, or it may be a pelletized substrate, or even a metallic substrate. For example, if a monolithic support is selected, it may be washcoated with gamma alumina in an amount of from 5 to 25 weight percent of the support. Thereafter, finely divided tungsten and finely-divided palladium can be applied to the washcoated support. Preferably, the amounts of these materials are such that where the tungsten and palladium are deposited on the same support portion, the tungsten is present on the downstream support portion in amounts of from 2 to 50, desirably 5 to 20, times the weight of the palladium on the downstream portion of the support. Where the palladium and tungsten are deposited on different portions of the support, the tungsten is preferably present on the downstream portion in an amount of 2 to 50 (desirably 5 to 20) times that of the weight of the palladium on the upstream portion. In both the embodiments, the palladium is preferably present in an amount of from 0.02 to 1.0% by weight of the support. Relative to the weight of the support (or the portion thereof on which it is deposited) the tungsten is preferably used in amounts of 0.2 to 5, preferably 0.5 to 5.0, weight percent.

The invention, its organization and its method of operation, will best be understood from the following description of specific embodiments thereof in which reference is made to the accompanying drawings wherein:—

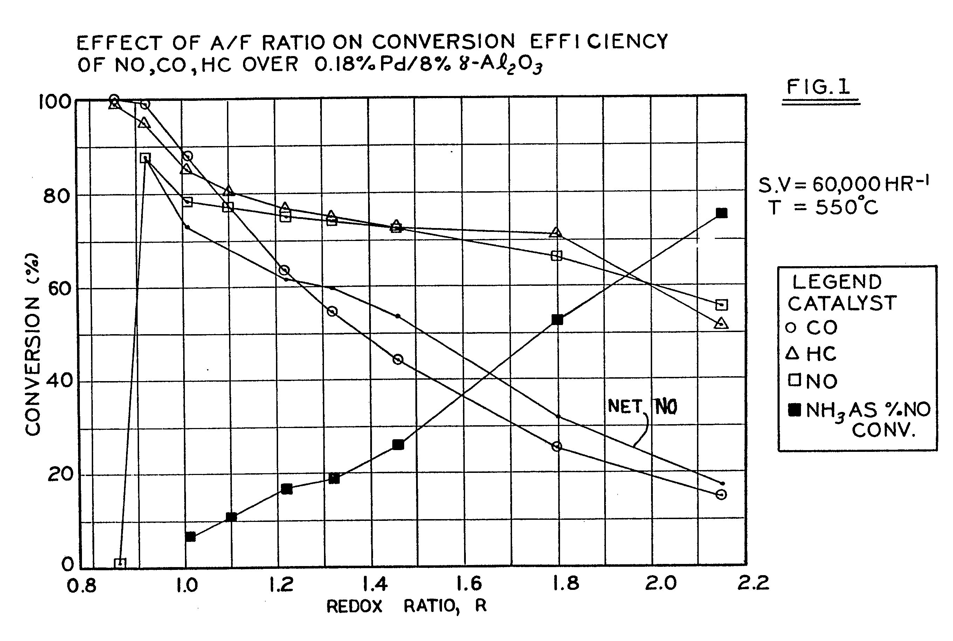

Figure 1 is a graphical presentation of data on the effect or redox ratio on the conversion efficiency of oxides of nitrogen, carbon monoxide and hydrocarbons over a catalyst system containing 0.18% by weight palladium and 8% by weight gamma alumina;

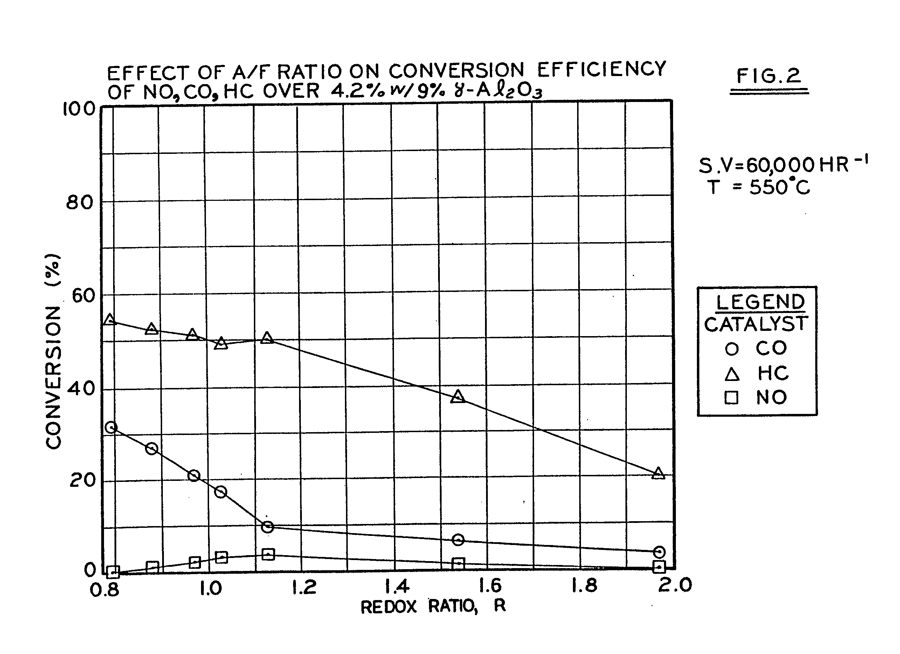

Figure 2 is a graphical presentation of data on the effect or redox ratio on the conversion efficiency of oxides of nitrogen, carbon monoxide and hydrocarbons over a catalyst system containing 4.2% by weight tungsten and 9% by weight gamma alumina; and

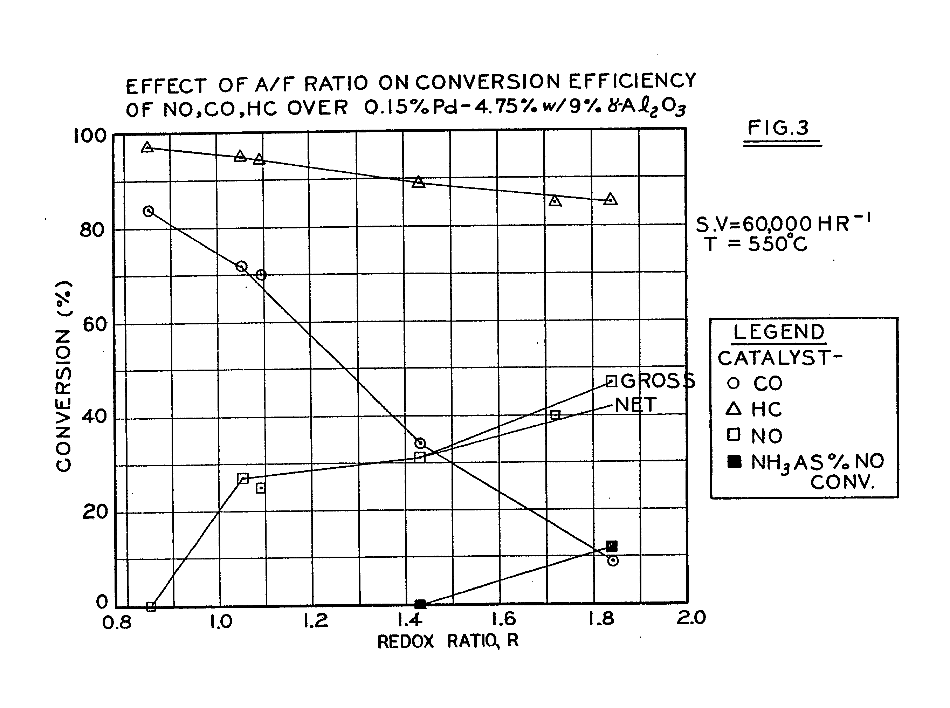

Figure 3 is a graphical presentation of data on the effect or redox ratio on conversion efficiency of oxides of nitrogen, carbon monoxide and hydrocarbons over a catalyst system containing 0.15% by weight palladium, 4.75% by weight tungsten and 9% by weight gamma alumina.

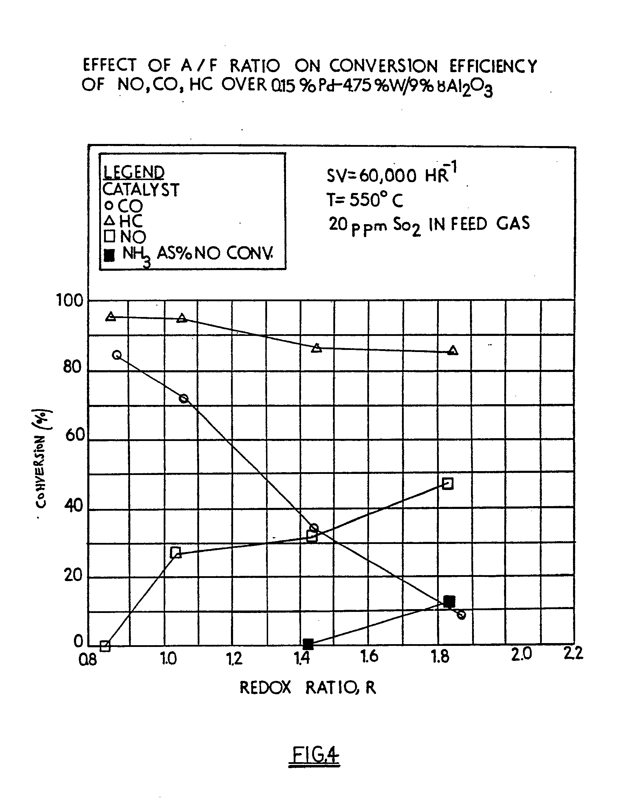

Figure 4 is a graphical presentation of data on the effect of redox ratio on the conversion efficiency of oxides of nitrogen, carbon monoxide and hydrocarbons over a catalyst system containing 0.15% by weight palladium/4.75% by weight tungsten, and 9% by weight gamma alumina;

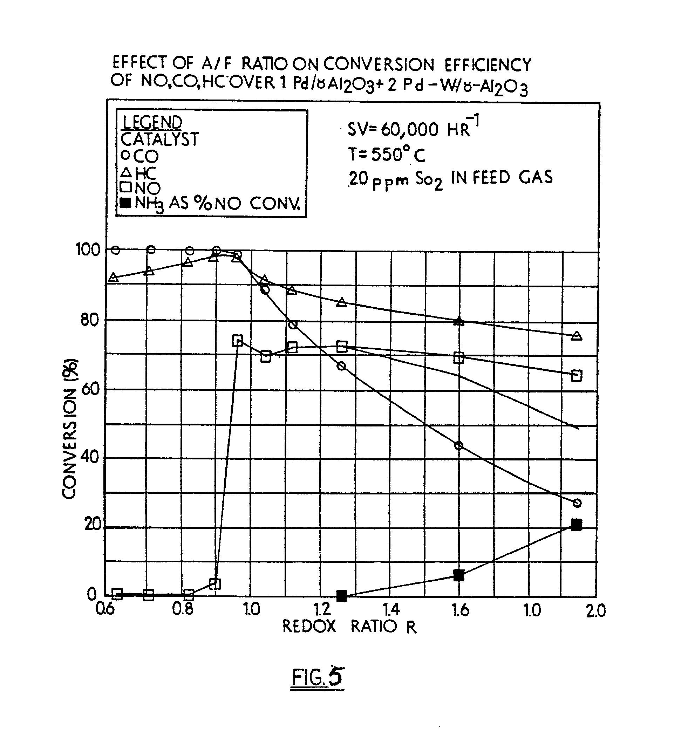

Figure 5 is a graphical presentation of data on the effect of redox ratio on the conversion efficiency of oxides of nitrogen, carbon monoxide and hydrocarbons over a catalyst system containing a substrate having 9% by weight gamma alumina over its entire extent and over a first half or upstream support portion thereof, 0.15% by weight palladium and over a downstream half thereof 0.15% by weight palladium/4.75% by weight tunsten;

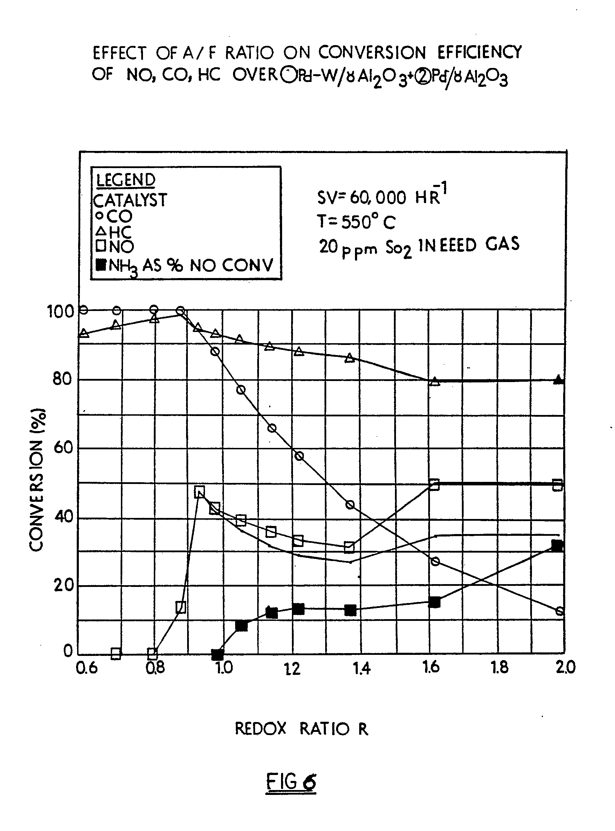

Figure 6 is a graphical presentation of data on the effect of redox ratio on conversion efficiency of oxides of nitrogen, carbon monoxide and hydrocarbons over the catalyst system of Figure 5 with the catalyst system reversed so that the palladium/tungsten portion thereof now defines the upstream portion of the support medium and the palladium based catalyst defines the downstream support portion; and

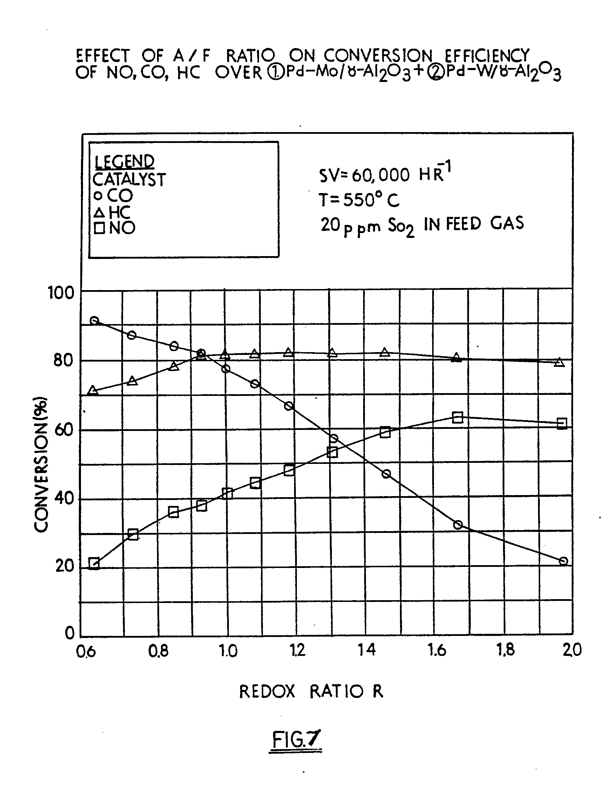

Figure 7 is a graphical presentation of data on the effect of redox ratio on conversion efficiency of oxides of nitrogen, carbon monoxide and hydrocarbons over a catalyst system similar to that graphically depicted in Figure 5 with the addition to the upstream palladium of 2.0% by weight molybdenum.

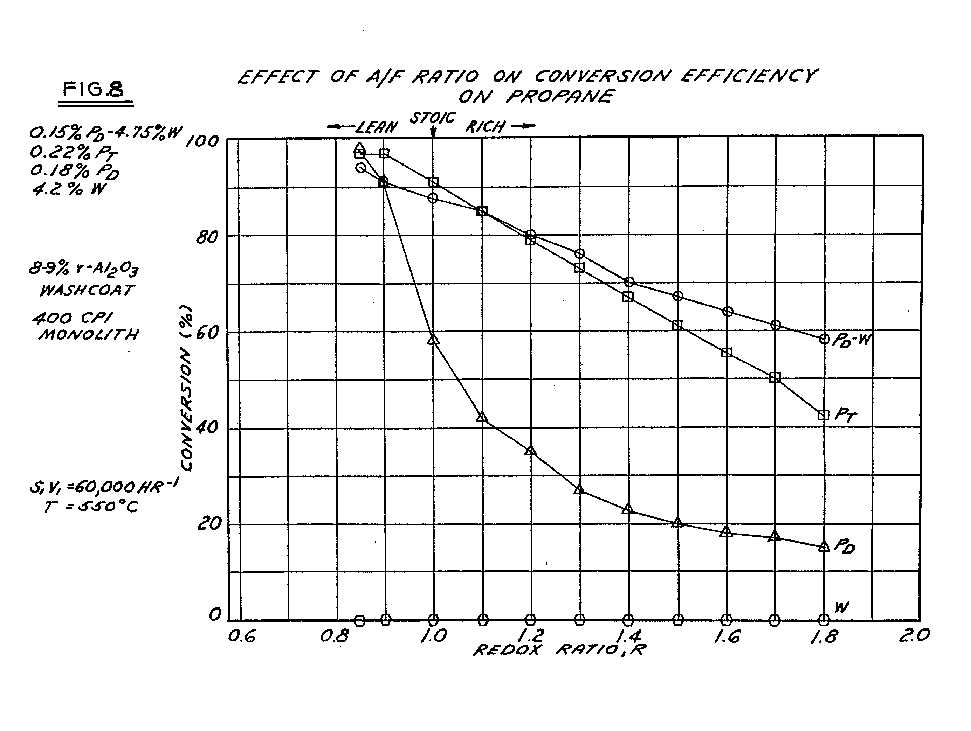

Figure 8 is a graphical presentation of data on the effect of redox ratio on the conversion efficiency of propane over various catalyst systems as noted in the Figure;

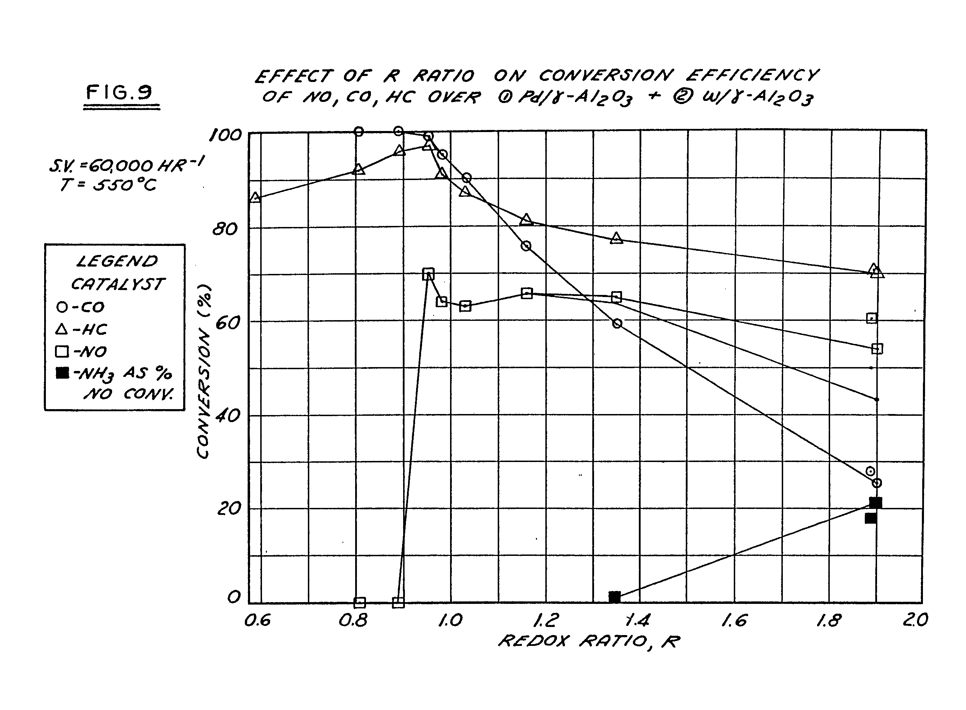

Figure 9 is a graphical presentation of data on the effect of redox ratio on the conversion efficiency of oxides of nitrogen, carbon monoxide and hydrocarbons over a catalyst system containing a substrate having 9% by weight gamma alumina over its entire extent, and over a first half or upstream support portion thereof, 0.18% by weight palladium, and over a downstream half thereof, 4.2% by weight tungsten;

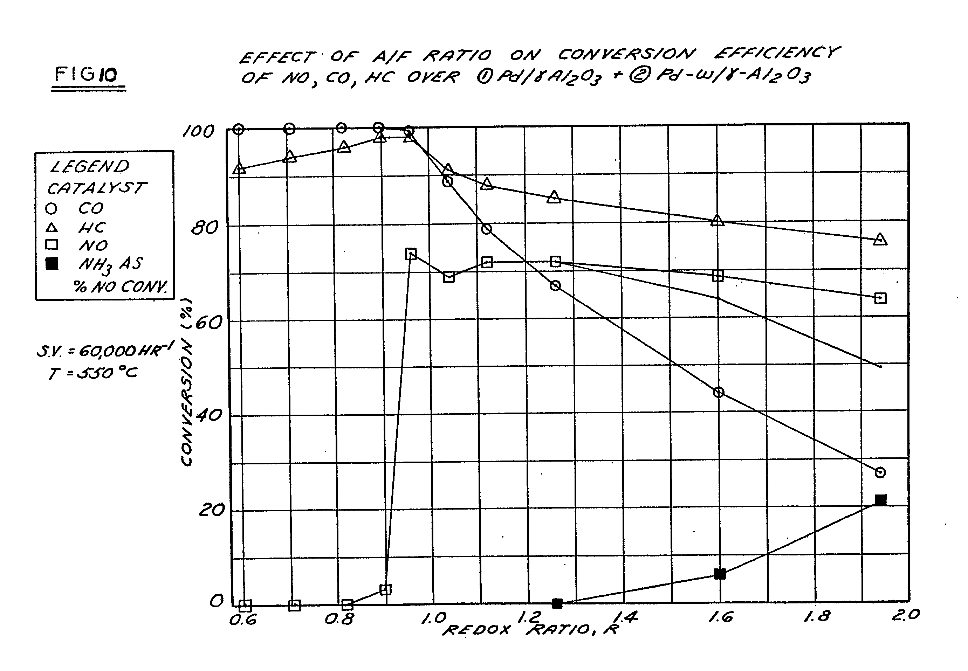

Figure 10 is a graphical presentation of data on the effect of redox ratio on conversion efficiency of oxides of nitrogen, carbon monoxide and hydrocarbons over a catalyst system containing a substrate having 9% by weight gamma alumina over its entire extent, and over a first half or upstream portion thereof, 0.18% by weight palladium, and over a downstream half thereof, 0.15% by weight palladium/4.75% weight tungsten; and

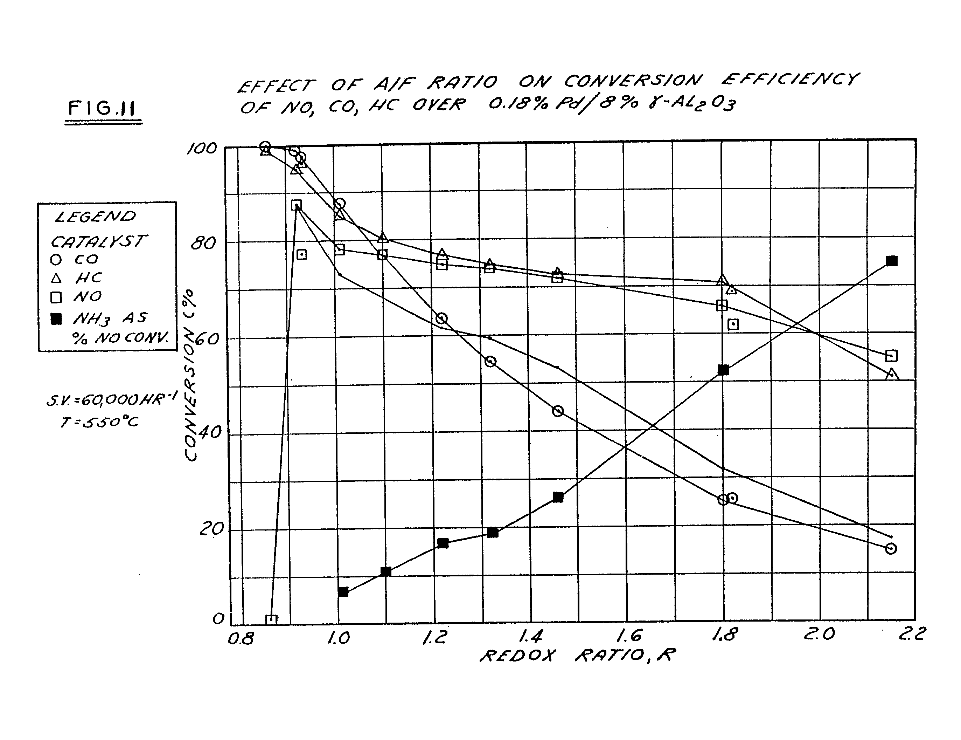

Figure 11 is a graphical presentation of data on the effect of redox ratio on conversion efficiency of oxides of nitrogen, carbon monoxide and hydrocarbons over a catalyst system containing a substrate having 8% by weight gamma alumina over its entire extent, along with 0.18% by weight palladium over its entire extent.

For the purposes of comparison, the catalytic activity of three different catalyst systems with respect to the effect of the redox ratio on the conversion efficiency of that catalyst system on oxides of nitrogen, carbon monoxide and unburned hydrocarbons such as derived from the combustion of hydrocarbon or hydrocarbon/alcohol fuels are demonstrated in Figures 1, 2 and 3. The first system contains only palladium, the second system contains only tungsten and the third system contains both palladium and tungsten in accordance with this invention.

To illustrate the manufacture of these catalyst systems, detailed instructions will be given for the manufacture of a catalyst system containing both palladium and tungsten. The palladium-only or tungsten-only catalyst system may be manufactured using the same general procedures simply by leaving out the palladium or the tungsten component as illustrated when the combined system is made.

The preparation of a catalyst system in accordance with this invention is as follows. The resulting catalyst system will contain palladium, tungsten and gamma alumina. The preparation is initiated by coating a cordierite honey-comb substrate (62 square cells/cm$^2$ (400 square cells/square inch), 0.15 mm (6 mil) wall thickness) as available from Corning Glass Company with a gamma alumina, the substrate is calcined at 600°C for a period of 3 to 4 hours. The completed substrate has approximately 9% by weight of the substrate of gamma alumina contained thereon.

The tungsten is next impregnated on the gamma alumina coated substrate using a solution of $H_2WO_4$ in concentrated $NH_4OH$. This solution is dried on the coated substrate at a temperature of 130°C and then calcined at 300°C for a time period of 3 to 4 hours. The tungsten is placed by this process onto the substrate in a finely divided manner and makes up approximately 4.75% by weight of the substrate of tungsten.

The palladium is now impregnated onto the substrate using an acidic aqueous solution of palladium chloride (4%/vol. in concentrated $HNO_3$) dried on the substrate at 130°C and then calcined at 500°C for a time period 3 to 4 hours. This results in approximately 0.15% by weight of the substrate of palladium being applied to the substrate in a finely divided state. With the great excess of tungsten available on the substrate, the tungsten is present on the substrate in a quantity such that the tungsten is available to substantially all of the palladium on the support medium.

By having the tungsten closely available to the palladium, we believe the following happens. There is believed to be an interaction between palladium and tungsten resulting in possible PdWO$_x$ type surface complex formulation where x varies from 3 to 2 to 1, depending upon reduction temperature, time of reduction, and reducing gas mixture. The PdWO$_x$ type surface complex has significantly different catalytic properties than either palladium or WO$_3$. Thus, under reducing conditions, such catalyst provides activity for saturated hydrocarbons which is similar to platinum without producing high NH$_3$ formation, a common product of NO reduction under reducing conditions over a Pt catalyst. The weight ratio of W/Pd could vary from 2 to 50, however, in the preferred limit it can vary from 5 to 20 times greater amount.

If a PdWO$_x$ complex is presynthesized for deposition on a substrate, then one can deposit this material on the washcoated substrate. In this case, no excess of tungsten over palladium is needed, and tungsten and palladium could be present in equal amounts on an atomic basis.

Although this preferred embodiment illustrated herein was prepared as outlined above, there are a number of ways that a skilled artisan can vary the preparation. For example, instead of impregnating tungsten and gamma alumina in two consecutive steps with calcination therebetween, one can combine these steps in one. Also, the gamma alumina support need not be coated on a honeycomb, but may be in a different configuration such as alumina pellets as required for a desired application.

In Figure 1 there is shown the effect of redox ratio on the conversion efficiency for oxides of nitrogen, carbon monoxide and unburned hydrocarbons over a palladium only catalyst on a gamma alumina coated substrate. This graph indicates that this catalyst normally maintains a respectable conversion efficiency for unburned hydrocarbons and reduction of oxides of nitrogen as the redox potential moves from less than one (fuel deficient) to more than one (fuel excess). However, the significant thing to note about the palladium only catalyst system is that the amount of ammonia produced as a percentage of the oxides of nitrogen reduced is drastically increased as the redox potential moves from 1.0 toward 2.2. The significant amount of ammonia produced is much more than can be tolerated in a such system.

In Figure 2 there is graphed the effect of the redox ratio on the conversion efficiency for oxides of nitrogen, carbon monoxide and unburned hydrocarbons over a tungsten only catalyst system on a gamma alumina washcoat. This graph indicates that the tungsten only system has almost no conversion efficiency in the reduction of oxides of nitrogen from a redox potential of 0.8 all the way to 2.0. This demonstrates that the tungsten only material has absolutely no efficiency for the conversion of oxides of nitrogen.

In Figure 3 there is seen the effect of redox ratio on the conversion efficiency for oxides of nitrogen, carbon monoxide and unburned hydrocarbons over a catalyst system containing 0.15% by weight palladium, 4.75% by weight tungsten on a gamma alumina washcoated substrate. This graphical presentation is of interest because it shows that the efficiency of this catalyst remains high for the conversion of hydrocarbons even though one moves into the rich fuel region past a redox potential of 1.0. It also shows that the oxides of nitrogen conversion rate is quite good in the rich region and actually increases as one goes to richer stoichiometric mixtures. The thing of particular importance with this catalyst system is that the ammonia produced as a percentage of the oxides of nitrogen converted remains very low and in some regions is nonexistent. For example, no ammonia is seen until a redox potential in excess of 1.4 is passed for this catalyst system and even at a redox potential greater than 1.8, the amount of ammonia produced as a percentage of the oxides of nitrogen converted is a relatively low 10% when compared to approximately 55% at the same point for the palladium only catalyst system shown in Figure 1.

This low ammonia production is a significant improvement because tungsten was added to palladium. The real interesting point is that tungsten by itself had no apparent activity for the reduction of oxides of nitrogen, but yet when this material is associated with a palladium catalyst, the uniquely beneficial results are achieved of permitting a significant conversion of oxides of nitrogen by the palladium/tungsten catalyst, yet the great suppression and control of the amount of ammonia produced as a result of the conversion.

Another significant aspect of the palladium/tungsten catalyst system will be understood after review of the material contained in Table 1 hereinbelow.

TABLE 1

Hydrocarbon conversions by catalysts of Figs. 1, 2 & 3

| R (redox ratio) | Catalyst | | | | | |
|---|---|---|---|---|---|---|
| | Pd | | W | | Pd-W | |
| | $C_3H_6$ | $C_3H_8$ | $C_3H_6$ | $C_3H_8$ | $C_3H_6$ | $C_3H_8$ |
| 1.0 | 100% | 58% | 76% | 0 | 100% | 88% |
| 1.1 | 100% | 42% | 76% | 0 | 100% | 85% |
| 1.2 | 100% | 35% | 73% | 0 | 100% | 80% |
| 1.3 | 100% | 27% | 67% | 0 | 100% | 76% |
| 1.4 | 100% | 23% | 64% | 0 | 100% | 70% |
| 1.5 | 100% | 20% | 58% | 0 | 100% | 67% |
| 1.6 | 100% | 18% | 52% | 0 | 100% | 64% |
| 1.7 | 100% | 17% | 47% | 0 | 100% | 61% |
| 1.8 | 100% | 15% | 41% | 0 | 100% | 58% |

The unique feature of this catalyst system as demonstrated in Table 1 is the catalyst system's ability to convert difficult to oxidize, saturated unburned hydrocarbons under oxygen deficient conditions and simultaneously provide some oxides of nitrogen conversion with minimum ammonia formation as demonstrated in Figure 3. For example, Table 1 shows that while a palladium only catalyst retains its efficiency in oxidizing $C_3H_6$, its ability to oxidize $C_3H_6$ drops off as R goes up from 1.0 to 1.8. At 1.8, its efficiency in this conversion is only 15%. Table 1 also shows that tungsten has absolutely no ability in converting $C_3H_8$ in the range of R's from 1.0 to 1.8. When palladium and tungsten are used together, the conversion efficiency for $C_3H_8$ is drastically increased at an R of 1.0 and remains drastically increased over any conversion efficiency achieved on a palladium only catalyst regardless of the redox potential at which the measurement is made. This effect is more than additive because the tungsten by itself has no efficiency in the oxidation of $C_3H_8$, but when it is combined with palladium the overall efficiency of the palladium for this conversion is greatly enhanced.

Under reducing conditions, for example, with the redox potential equal to 1.8, the catalyst system converts 45% of the gross oxide of nitrogen and 41% of the net oxides of nitrogen. At this location, the ammonia formation measured as a percentage of the oxides of nitrogen converted is only 10%. For this measurement and the other data displayed in Figure 3, the following may be stated. In a vehicle application where an engine is operating slightly lean of stoichiometry, the palladium/tungsten containing catalyst will give high unburned hydrocarbons and carbon monoxide conversion.

For example, at R=0.9 the unburned hydrocarbon and carbon monoxide conversions are approximately 96% and 80%, respectively. During rich transients (for example, during an acceleration when more power is demanded) the engine will run rich, that is, the air/fuel ratio decreases from the set point of 15.2—15.5 to approximately 14.3 (e.g. R=1.8) Under these conditions, the palladium/tungsten catalyst system of this invention can convert approximately 40% of the oxides of nitrogen to nitrogen gas with a minimum ammonia formation. It should also be noted that even under such reducing conditions the catalyst system of the invention is capable of converting over 85% of the total unburned hydrocarbons.

Referring now to Figures 4 to 7, the catalytic activity of our catalyst systems with respect to the effect of the redox ratio on the conversion efficiency of that catalyst system on oxides of nitrogen, carbon monoxide and unburned hydrocarbons is compared. The first system is a combined palladium/tungsten catalyst, similar to that described with reference to Figure 3; the second is a two-zone catalyst system in accordance with this invention in which the upstream support portion is palladium-based and the downstream support portion is palladium/tungsten; the third is a reversal of the second system; and the fourth is a system in accordance with this invention in which the upstream support portion contains palladium/molybdenum and a downstream support portion contains palladium/tungsten.

To illustrate the manufacture of a catalyst system, detailed instructions will be given for the manufacture of a catalyst system in accordance with our invention, namely, one containing palladium on an upstream portion of the catalyst support and (palladium) tungsten on a downstream portion of the catalyst support. The other catalyst systems disclosed herein may be manufactured using the same general procedures simply by selection of the appropriate elements as needed.

The preparation of a preferred catalyst system in accordance with this invention is as follows. The preferred catalyst system of this invention has the data generated thereon as set forth in Figure 5. The preferred catalyst system will be one which has a catalyst support medium having an upstream support portion over which exhaust gases initially flow and a downstream support portion over which exhaust gases flow after passing over the upstream support portion thereof. The upstream support portion will have palladium thereon, while the downstream support portion will have palladium and tungsten thereon as the principal catalyst elements. The preparation of this preferred catalyst system is initiated by coating a cordierite honeycomb substrate ((62 square cells/cm² 400 square cells per inch), 0.15 mm (6 mil) wall thickness) as available from Corning Glass Company, using gamma alumina washcoat. After coating with the gamma alumina, the substrate is calcined at 600°C for a period of 3 to 4 hours. This substrate has approximately 9% by weight of the substrate of gamma alumina contained thereon.

The tungsten is next impregnated on the downstream support portion of the support media over the gamma alumina which has been previously placed thereon. The tungsten is placed on the substrate by using solution of $H_2WO_4$ in concentrated $NH_4OH$. This solution is dried on the coated substrate at a temperature of 130°C and then calcined at 300°C for a time period of 3 to 4 hours. The tungsten is placed by this process onto the downstream support portion of the substrate in a finely divided manner and is present as approximately 4.75% by weight of the weight of the substrate.

The palladium is now impregnated onto both the upstream support portion and the downstream support portion of the support medium using an acidic aqueous solution of palladium chloride (4%/vol. in concentrated $HNO_3$). This solution is dried on the substrate at 130°C and then calcined at 500°C for a time period of 3 to 4 hours. This results in approximately 0.2% by weight of the substrate of palladium being applied to the substrate over its upstream support portion and its downstream support portion. In the downstream support portion, of course, there is an excess of tungsten available on the substrate and the tungsten is present in sufficient quantity such that the tungsten is available to substantially all of the palladium on the downstream support portion of the support medium.

Although this preferred embodiment was prepared as outlined above, there are a number of ways that a skilled artisan can vary the preparation. For example, instead of impregnating tungsten and gamma alumina in two consecutive steps on the downstream support portion of the support medium, this process can be combined into one step. Also, the gamma alumina need not be coated on a honeycomb, but may be coated onto different support configurations such as a metallic substrate as required for different applications. Also, the palladium/tungsten combination may be placed on the support medium as a presynthesized compound in a single step. Pelletised or extruded alumina can be used as a support medium in place of a monolithic support. In this case, one does not need a high surface area alumina washcoating step.

Reference is now made to Figures 4 to 7 so that the benefits of the catalyst system of this invention may be better understood.

In Figure 4 there is shown the effect or redox ratio on the conversion efficiency for oxides of nitrogen, carbon monoxide and unburned hydrocarbons over a catalyst system coated uniformly with 0.15% by weight of the substrate palladium, 4.75% by weight of the substrate tungsten, and 9% by weight of gamma alumina. This graphical presentation is of interest because it shows that the efficiency of this catalyst remains high for the conversion of hydrocarbons even though one moves into a fuel rich region past a redox ratio of 1.0. It also shows that the oxides of nitrogen conversion ratio is good in the rich region and actually increases as one goes to richer stoichiometric mixtures. It does, however, show that the oxides of nitrogen conversion rate is not so good for redox ratios below approximately 1.4.

In the first embodiment of the invention, the catalyst substrate is divided into an upstream support portion and a downstream support portion. Both the upstream support portion and the downstream support portion contain, in a preferred test embodiment from which data was developed for presentation in Figure 5, 9% by weight of the substrate gamma alumina. The upstream support portion and the downstream support portion of the substrate were generally two portions of the substrate placed back to back. The downstream support portion of the substrate contained 4.75% by weight of that portion of the substrate of tungsten, while both the upstream and the downstream portions of the substrate contained 0.15% by weight of the substrate of palladium. Thus, the upstream portion of the substrate had palladium thereon, while the downstream portion of the substrate had a palladium/tungsten combination thereon. The significant thing to note about this new combination was that the gross $NO_x$ conversion efficiency was greatly increased at redox ratios as low as 0.9. The amount of ammonia formed, as compared to oxides of nitrogen converted, also remained extremely low over most redox ratios. This catalyst system also has a very excellent ability in converting unburned hydrocarbons across a significant range of redox ratios.

Figure 5 graphically illustrates that the catalyst made in accordance with the teachings of a preferred embodiment of this invention would serve as an excellent three-way catalyst. Such a catalyst normally operates at a redox ratio of about 1.0 plus or minus 0.05 units. In this range, the efficiencies for the catalyst system in conversion of oxides of nitrogen, unburned hydrocarbons and carbon monoxide is very good. In fact, one may say the conversion efficiency, if used as a three-way catalyst, is excellent because it is based upon relatively inexpensive catalyst materials rather than the more costly platinum or rhodium which have been used in the past.

The graphical information depicted in Figure 6 was obtained by turning the catalyst system used to obtain the information in Figure 5 in the opposite direction. In the opposite direction, the upstream support portion of the catalyst substrate had the palladium/tungsten combination thereon, while the downstream support portion had the palladium thereon. The data to be noted here is that while the catalyst system did maintain its good conversion efficiency for unburned hydrocarbons and carbon monoxide over a significant range of redox ratios, its conversion efficiency with respect to total oxides of nitrogen was much depressed over that shown in Figure 5. Therefore, the placement of the palladium on the upstream portion, followed by the palladium/tungsten combination, is demonstrated as the only feasible way of obtaining the very effective total oxides of nitrogen conversion around a redox ratio of 1.0.

Figure 7 is a graphical presentation of data obtained on a catalyst system similar to that tested in Figure 5. The sole exception in this situation was that the upstream portion of the catalyst system not only had palladium thereon, but also 2% by weight of the upstream portion of the substrate of molybdenum. The purpose of the molybdenum is to increase the selectivity of the palladium in its ability to convert oxides of nitrogen under fuel deficient (oxygen rich) operating conditions that exist at redox ratios below 1.0. It should be noted that the efficiency below 1.0 is promoted if molybdenum is added, but the efficiency above 1.0 is curtailed for at least some or all of the redox ratios above the 1.0 position. One may therefore want to use molybdenum along the palladium on a catalyst system which is operated on the oxygen rich side of stoichiometric conditions such as, for example, the conditions which are found in engines operating under the fast burn/low friction cycle.

It is understood that many different materials may find their way onto a catalyst substrate for a particular use. For example, certain materials are put on the catalyst substrate in order to stabilize the gamma alumina catalyst washcoat. Also, other washcoat material such as zirconia or alpha alumina may be used and these also may have their stabilizing elements. As an additional matter, stabilizing elements may be present for stabilizing the catalyst materials under certain operating conditions, for example, under oxidizing or reducing conditions. In a similar manner, materials also find their way onto the catalyst substrate in order to promote catalyst activity.

In order to disclose the catalyst system of the second embodiment of this invention, we desire to demonstrate the catalytic activity of three different catalyst systems with respect to the effect of the redox ratio on the conversion efficiency of that catalyst system on oxides of nitrogen, carbon monoxide and unburned hydrocarbons. The three catalyst systems are demonstrated in Figures 8, 9 10 and 11. The first system is a two-zone catalyst system in accordance with the second embodiment of the invention, in which the first zone is palladium, the second zone is tungsten, the second is also a two-zone catalyst system in which the first zone is palladium and the second zone is palladium/tungsten, the third is a palladium only system.

To illustrate the manufacture of a catalyst system, detailed instructions will be given for the manufacture of a catalyst system in accordance with our invention, namely, one containing palladium on an upstream portion of the catalyst support and tungsten on a downstream portion of the catalyst support. The other catalyst systems disclosed herein may be manufactured using the same general procedure simply by selection of the appropriate elements as needed.

The preparation of a preferred catalyst system in accordance with this invention is as follows. The preferred catalyst system of this invention has the data generated thereon as set forth in Figure 8. The preferred catalyst system will be one which has a catalyst support medium having an upstream support portion over which exhaust gases initially flow and a downstream support portion over which exhaust gases flow after passing over the upstream support portion thereof. The upstream support portion will have palladium thereon, while the downstream support portion will have tungsten thereon as the principal catalyst elements. The preparation of this preferred catalyst system is initiated by coating a cordierite honeycomb substrate ((62 square cells/$cm^2$ 400 square cells per inch), 0.15 mm (6 mil) wall thickness) as available from Corning Glass Company, using gamma alumina washcoat. After coating with the gamma alumina, the substrate is calcined at 600°C for a period of 3 to 4 hours. This substrate has approximately 9% by weight of the substrate of gamma alumina contained thereon.

The tungsten is impregnated on the downstream support portion of the support media over the gamma alumina which has been previously placed thereon. The tungsten is placed on the substrate by using a solution of $H_2WO_4$ in concentrated $NH_4OH$. The solution is dried on the coated substrate at a temperature of 130°C and then calcined at 300°C for a time period of 3 to 4 hours. The tungsten is placed by this process onto the downstream support portion of the substrate in a finely divided manner and is present as approximately 4.2% by weight of the weight of the substrate.

The palladium is impregnated onto the upstream support portion of the support medium using an acidic aqueous solution of palladium chloride (4%/vol. in concentrated $HNO_3$). This solution is dried on the substrate at 130°C and then calcined at 500°C for a time period of 3 to 4 hours. This results in approximately 0.18% by weight of the substrate of palladium being applied to the substrate over its upstream support portion.

Although this preferred embodiment was prepared as outlined above, there are a number of ways that a skilled artisan can vary the preparation. For example, instead of impregnating tungsten and gamma alumina in two consecutive steps on the downstream support portion of the support medium, this process can be combined into one step. Also, the gamma alumina need not be coated on a honeycomb, but may be coated onto different support configurations such as a metallic substrate as required for different applications. Pelletised or extruded alumina can be used as a support medium in place of a monolithic support. In this case, one does not need a high surface area alumina wash-coating step.

Reference is now made to Figures 8 to 11 so that the benefits of the catalyst system of this invention may be better understood.

In Figure 8 there is shown the effect of redox ratio upon the conversion efficiency of particular noted catalysts for converting propane to carbon dioxide and water vapour. This Figure indicates that tungsten has no ability for converting propane, regardless of redox potential. Palladium, by itself, is also shown to be a poor catalyst for converting propane at redox ratios of more than 0.9. Platinum and a combined palladium/tungsten catalyst are shown to be the best catalysts for converting propane.

Figure 8 demonstrates that neither palladium nor tungsten, by themselves, at a redox ratio greater than 0.9, are particularly efficient for the conversion of the relatively simple hydrocarbon propane. However, subsequent Figures will indicate that if the two materials, palladium and tungsten, are placed one behind the other on a catalyst substrate, their efficiency for conversion of hydrocarbons, which includes propane, is enhanced compared to the palladium only catalyst (Figure 11).

In the catalyst system of this specification, the catalyst substrate is divided into an upstream support portion and a downstream support portion. Both the upstream support portion and the downstream support portion contain, in a preferred test embodiment from which data was developed for presentation in Figure 9, 9% by weight of the substrate gamma alumina. The upstream support portion and the downstream support portion of the substrate were generally two portions of the substrate placed back to back. The downstream support portion of the substrate contained 4.2% by weight of that portion of the substrate of tungsten, while the upstream portion of the substrate contained 0.18% by weight of the substrate of palladium. Thus, the upstream portion of the substrate has palladium thereon, while the downstream portion of the substrate has tungsten thereon. The significant thing to note about this new combination is that the net $NO_x$ conversion efficiency was greatly increased compared to palladium at redox ratios greater than 1.15. The amount of ammonia formed, as compared to oxides of nitrogen converted, remained extremely low over most redox ratios. This catalyst system also has a good ability in converting unburned hydrocarbons such as propane across a significant range of redox ratios.

Figure 9 graphically illustrates that the catalyst made in accordance with the teachings of a preferred embodiment of this invention would serve as an excellent three-way catalyst. Such a catalyst normally operates at a redox ratio of about 1.0 plus or minus 0.05 units. In this range, the efficiencies for the catalyst system in conversion of oxides of nitrogen, unburned hydrocarbons and carbon monoxide is very good. In fact, one may say the conversion efficiency, if used as a three-way catalyst, is excellent because it is based upon relatively inexpensive catalyst materials rather than the more costly platinum or rhodium which have been used in the past.

Figure 10 is a graphical presentation of data obtained on a catalyst system similar to that tested in Figure 9. The sole exception in this situation was that the downstream portion of the catalyst system not only had tungsten thereon, but also 0.15% by weight of the downstream portion of the substrate of palladium. The purpose of the palladium and tungsten together is to increase the ability to convert unburned hydrocarbons to carbon monoxide and water vapor.

In Figure 11 there is shown the effect of redox ratio on the conversion efficiency for oxides of nitrogen, carbon monoxide and unburned hydrocarbons over a catalyst system coated uniformly with 0.18% by weight of the substrate palladium and 8% by weight of the substrate gamma alumina. This particular Figure shows that a palladium only catalyst is one which has poor selectivity. By poor selectivity we mean that the catalyst produces an unusual amount of ammonia as a percentage of the oxides of nitrogen converted by the catalyst. This is particularly true as the redox ratio moves up from approximately 1.0. For example, when compared to the conversion efficiency of the catalyst detailed in Figure 9, the palladium only catalyst, at a redox ratio of 1.6, converts approximately 36% of oxides of nitrogen into ammonia, whereas the catalyst shown in Figure 9, which is the palladium catalyst followed by a tungsten catalyst, results in no more than 10% of the converted oxides of nitrogen going to ammonia. The system in which a palladium catalyst is followed by a palladium/tungsten catalyst, as depicted in Figure 10, results, at a redox ratio of 1.6, in the conversion of about 5% of any converted oxides of nitrogen going to ammonia.

It is understood that many different materials may find their way onto a catalyst substrate for a particular use. For example, certain materials are put on the catalyst substrate in order to stabilize the gamma alumina catalyst washcoat. Also, other washcoat material such as zirconia or alpha alumina may be used and these also may have their stabilizing elements. As an additional matter, stabilizing elements may be present for stabilizing the catalyst materials under certain operating conditions, for example, under oxidizing or reducing conditions. In a similar manner, materials also find their way onto the catalyst substrate in order to promote catalyst activity or to ensure the action of the stabilizer material. The description of the invention above is not therefore to be construed as eliminating the possibility of adding such materials to the catalyst system. It is well within the scope of the skilled artisan to use the unique benefits of this catalyst system with other catalyst material, promoters and stabilizers therefor.

**Claims**

1. An exhaust gas catalyst system comprising a support having palladium and tungsten deposited thereon, the support having an upstream support portion and a downstream support portion characterised in that the palladium is deposited at least on the upstream support portion and the tungsten is deposited only on the downstream support portion.

2. An exhaust gas catalyst system according to claim 1 wherein the palladium is deposited on the upstream support portion and on the downstream support portion.

3. An exhaust gas catalyst system according to claim 2 in which the upstream support portion also has molybdenum deposited thereon.

4. An exhaust gas catalyst system according to claim 2 or claim 3 wherein the tungsten is present on the downstream support portion in an amount of from 2 to 50 times the weight of palladium present on said downstream support portion.

5. An exhaust gas catalyst system according to claim 4 wherein the tungsten is present on the downstream support portion in an amount of from 5 to 20 times the weight of palladium present in the downstream support portion.

6. An exhaust gas catalyst system according to any one of claims 2 to 5 wherein the tungsten has been deposited on the downstream support portion before the palladium.

7. An exhaust gas catalyst system according to any one of claims 1 to 5 wherein palladium and tungsten are deposited on the downstream support portion of the substrate in the form of a complex of the formula PdWOx (where x is from 1 to 3).

8. An exhaust gas catalyst system according to claim 1 wherein the downstream support portion is substantially free from palladium.

9. An exhaust gas catalyst system according to claim 8 wherein the tungsten is present on the downstream support portion in an amount of from 2 to 50 times the weight of palladium present on the upstream support portion.

10. An exhaust gas catalyst system according to claim 9 in which tungsten is present on the downstream support portion in an amount of from 5 to 20 times the weight of palladium present on the upstream support portion.

11. An exhaust gas catalyst system according to any one of claims 1 to 10 in which the support is monolithic.

12. An exhaust gas catalyst system according to any one of claims 1 to 10 in which the support is pelletised.

13. An exhaust gas catalyst system according to any one of claims 1 to 10 in which the support is metallic.

14. An exhaust gas catalyst system according to claim 11 or claim 12 wherein the support comprises gamma allumina.

15. An exhaust gas catalyst system according to any one of claims 1 to 14 containing from 0.02 to 1.0% by weight of the support of finely divided palladium.

16. A method of treating exhaust gases from an internal combustion which comprises contacting the exhaust gases with an exhaust gas catalyst system according to any one of claims 1 to 15 in such a way that the exhaust gases initially flow over the upstream support portion and then over the downstream support portion.

**Patentansprüche**

1. Abgaskatalysatorsystem, bestehend aus einem Träger mit darauf abgeschiedenem Palladium und Wolfram, wobei der Träger einen stromaufwärtigen Trägerteil und einen stromabwärtigen Trägerteil aufweist, dadurch gekennzeichnet, dass das Palladium mindestens auf dem stromaufwärtigen Trägerteil und das Wolfram nur auf dem stromabwärtigen Trägerteil abgeschieden ist.

2. Abgaskatalysatorsystem nach Anspruch 1, worin das Palladium auf dem stromaufwärtigen Trägerteil und auf dem stromabwärtigen Trägerteil abgeschieden ist.

3. Abgaskatalysatorsystem nach Anspruch 2, worin ferner Molybdän auf dem stromaufwärtigen Trägerteil abgeschieden ist.

4. Abgaskatalysatorsystem nach Anspruch 2 oder 3, worin das Wolfram auf dem stromabwärtigen Trägerteil in der 2- bis 50-fachen Menge des auf dem besagten stromabwärtigen Trägerteil vorhandenen Palladiumgewichts vorliegt.

5. Abgaskatalysatorsystem nach Anspruch 4, worin das Wolfram auf dem stromabwärtigen Trägerteil in der 5- bis 20-fachen Menge des auf dem stromabwärtigen Trägerteil vorhandenen Palladiumgewichts vorliegt.

6. Abgaskatalysatorsystem nach einem der Ansprüche 2 bis 5, worin das Wolfram vor dem Palladium auf dem stromabwärtigen Trägerteil abgeschieden wurde.

7. Abgaskatalysatorysystem nach einem der Ansprüche 1 bis 5, worin das Palladium und Wolfram auf dem stromabwärtigen Trägerteil des Substrats in Form eines Komplexes der Formel PdWO$_x$ (wobei x 1 bis 3 beträgt) abgeschieden sind.

8. Abgaskatalysatorsystem nach Anspruch 1, worin der stromabwärtige Trägerteil im wesentlichen frei von Palladium ist.

9. Abgaskatalysatorsystem nach Anspruch 8, worin das Wolfram auf dem stromabwärtigen Trägerteil in der 2- bis 50-fachen Menge des auf dem stromaufwärtigen Trägerteil vorhandenen Palladiumgewichts vorliegt.

10. Abgaskatalysatorsystem nach Anspruch 9, worin das Wolfram auf dem stromabwärtigen Trägerteil in der 5- bis 20-fachen Menge des auf dem stromaufwärtigen Trägerteil vorhandenen Palladiumgewichts vorliegt.

11. Abgaskatalysatorsystem nach einem der Ansprüche 1 bis 10, worin der Träger monolithisch is.

12. Abgaskatalysatorsystem nach einem der Ansprüche 1 bis 10, worin der Träger tablettiert ist.

13. Abgaskatalysatorsystem nach einem der Ansprüche 1 bis 10, worin der Träger metallisch ist.

14. Abgaskatalysatorsystem nach Anspruch 11 oder 12, worin der Träger aus gamma-Aluminiumoxyd besteht.

15. Abgaskatalysatorsystem nach einem der Ansprüche 1 bis 14, enthaltend 0,02 bis 1,0 Gew.-% feinverteiltes Palladium, bezogen auf den Träger.

16. Verfahren zur Behandlung der Abgase von Brennkraftmaschinen, darin bestehend, das man die Abgase so mit einem Abgaskatalysatorsystem nach einem der Ansprüche 1 bis 15 in Berührung bringt, dass die Abgase zunächst über den stromaufwärtigen Trägerteil und danach über den stromabwärtigen Trägerteil strömen.

**Revendications**

1. Système catalytique pour gaz d'échappement comprenant un support sur lequel du palladium et du tungstène sont déposés, le support comportant une partie de support d'amont et une partie de support d'aval, caractérisé en ce que le palladium est déposé au moins sur la partie de support d'amont et le tungstène est déposé uniquement sur la partie de support d'aval.

2. Système catalytique pour gaz d'échappement suivant la revendication 1, dans lequel le palladium est déposé sur la partie de support d'amont et sur la partie de support d'aval.

3. Système catalytique pour gaz d'échappement suivant la revendication 2, dans lequel la partie du support d'amont porte également de molybdène déposé.

4. Système catalytique pour gaz d'échappement suivant la revendication 2 ou 3, dans lequel le tungstène est présent sur la partie de support d'aval en une quantité de 2 à 50 fois le poids de palladium présent sur la partie de support d'aval.

5. Système catalytique pour gaz d'échappement suivant la revendication 4, dans lequel le tungstène est présent sur la partie de support d'aval en une quantité de 5 à 20 fois le poids de palladium présent sur la partie de support d'aval.

6. Système catalytique pour gaz d'échappement suivant l'une quelconque des revendications 2 à 5, dans lequel le tungstène a été déposé sur la partie de support d'aval avant le palladium.

7. Système catalytique pour gaz d'échappement suivant l'une quelconque des revendications 1 à 5, dans lequel le palladium et le tungstène sont déposés sur la partie de support d'aval du substrat sous la forme d'un complexe de la formule PdWO$_x$ (où x a une valeur de 1 à 3).

8. Système catalytique pour gaz d'échappement suivant la revendication 1, dans lequel la partie de support d'aval est sensiblement exempte de palladium.

9. Système catalytique pour gaz d'échappement suivant la revendication 8, dans lequel le tungstène est présent sur la partie de support d'aval en une quantité de 2 à 50 fois le poids de palladium présent sur la partie de support d'amont.

10. Système catalytique pour gaz d'échappement suivant la revendication 9, dans lequel le tungstène est présent sur la partie de support d'aval en une quantité de 5 à 20 fois le poids de palladium présent sur la partie de support d'amont.

11. Système catalytique pour gaz d'échappement suivant l'une quelconque des revendications 1 à 10, dans lequel le support est monolithique.

12. Système catalytique pour gaz d'échappement suivant l'une quelconque des revendications 1 à 10, dans lequel le support est granulé.

13. Système catalytique pour gaz d'échappement suivant l'une quelconque des revendications 1 à 10, dans lequel le support est métallique.

14. Système catalytique pour gaz d'échappement suivant la revendication 11 ou 12, dans lequel le support comprend de l'alumine gamma.

15. Système catalytique pour gaz d'échappement suivant l'une quelconque des revendications 1 à 14, le support contenant de 0,02 a 1,0% en poids de palladium finement divisé.

16. Méthode de traitement des gaz d'échappement provenant d'une combustion interne qui comprend la mise en contact des gaz d'échappement et d'un système catalytique pour gaz d'échappement suivant l'une quelconque des revendications 1 à 15, de telle façon que les gaz d'échappement passent d'abord sur la partie de support d'amont et ensuite sur la partie de support d'aval.

EFFECT OF A/F RATIO ON CONVERSION EFFICIENCY OF NO,CO,HC OVER 0.18% Pd/8% $\gamma$-A$\ell_2$O$_3$

FIG.1

S.V = 60,000 HR$^{-1}$
T = 550°C

LEGEND
CATALYST
o CO
△ HC
□ NO
■ NH$_3$ AS %·NO CONV.

NET NO

CONVERSION (%)

REDOX RATIO, R

0 070 736

EFFECT OF A/F RATIO ON CONVERSION EFFICIENCY OF NO, CO, HC OVER 4.2% w/9% $\gamma$-A$l_2$O$_3$

FIG.2

S.V=60,000 HR$^{-1}$
T = 550°C

LEGEND
CATALYST
O CO
△ HC
□ NO

CONVERSION (%)

REDOX RATIO, R

0 070 736

EFFECT OF A/F RATIO ON CONVERSION EFFICIENCY OF NO,CO,HC OVER 0.15% Pd – 4.75% w/9% $\gamma$·A$\ell_2$O$_3$

FIG.3

S.V = 60,000 HR$^{-1}$
T = 550°C

LEGEND
CATALYST-
○ CO
△ HC
□ NO
■ NH$_3$ AS % NO CONV.

CONVERSION (%)

REDOX RATIO, R

GROSS
NET

EFFECT OF A / F RATIO ON CONVERSION EFFICIENCY
OF NO, CO, HC OVER 0.15 % Pd-4.75 %W/9% δAl₂O₃

FIG.4

EFFECT OF A/F RATIO ON CONVERSION EFFICIENCY
OF NO,CO,HC OVER 1 Pd/ẟAl$_2$O$_3$+ 2 Pd – W/ẟ-Al$_2$O$_3$

FIG. 5

5

EFFECT OF A/F RATIO ON CONVERSION EFFICIENCY
OF NO, CO, HC OVER ①Pd-W/ϒAl$_2$O$_3$+②Pd/ϒAl$_2$O$_3$

LEGEND
CATALYST
○ CO
△ HC
□ NO
■ NH$_3$ AS % NO CONV

SV= 60,000 HR$^{-1}$
T= 550° C
20 ppm So$_2$ IN EEED GAS

CONVERSION (%)

REDOX RATIO R

FIG 6

# 0 070 736

EFFECT OF A / F RATIO ON CONVERSION EFFICIENCY
OF NO, CO, HC OVER ① Pd—Mo/ɤ-Al$_2$O$_3$ + ② Pd—W/ɤ-Al$_2$O$_3$

LEGEND
CATALYST
○ CO
△ HC
□ NO

SV= 60,000 HR$^{-1}$
T= 550° C
20 ppm So$_2$ IN FEED GAS

CONVERSION(%)

REDOX RATIO R

FIG.7

7

EFFECT OF A/F RATIO ON CONVERSION EFFICIENCY ON PROPANE

FIG.8

0.15% Pd - 4.75% W
0.22% Pt
0.18% Pd
4.2% W

8-9% γ-Al₂O₃ WASHCOAT

400 CPI MONOLITH

S.V. = 60,000 HR⁻¹
T = 550°C

FIG.9

EFFECT OF R RATIO ON CONVERSION EFFICIENCY
OF NO, CO, HC OVER ① Pd/γ-Al₂O₃ + ② W/γ-Al₂O₃

S.V. = 60,000 HR⁻¹
T = 550°C

LEGEND
CATALYST
○ - CO
△ - HC
□ - NO
■ - NH₃ AS %
NO CONV.

CONVERSION (%)

REDOX RATIO, R

FIG 10

EFFECT OF A/F RATIO ON CONVERSION EFFICIENCY OF NO, CO, HC OVER ① $Pd/\delta Al_2O_3$ + ② $Pd-\omega/\delta-Al_2O_3$

FIG.11

EFFECT OF A/F RATIO ON CONVERSION EFFICIENCY OF NO, CO, HC OVER 0.18% Pd/8% $\gamma$-AL$_2$O$_3$

LEGEND

CATALYST
O CO
△ HC
□ NO
■ NH$_3$ AS % NO CONV.

S.V.=60,000 HR$^{-1}$
T=550°C

CONVERSION (%)

REDOX RATIO, R

0 070 736